# EUROPÄISCHE PATENTSCHRIFT

(11) **EP 0 905 385 B1**
(45) Veröffentlichungstag und Bekanntmachung des Hinweises auf die Patenterteilung: **24.11.2004**
(21) Anmeldenummer: 98810872.6
(22) Anmeldetag: 02.09.1998
(51) Int. Cl.: F16B 13/06

(54) **Spreizdübel**
Expansion dowel
Cheville d'expansion

(30) Priorität: 17.09.1997 DE 19740823
(43) Veröffentlichungstag der Anmeldung: 31.03.1999
(73) Patentinhaber: HILTI Aktiengesellschaft, 9494 Schaan (LI)
(72) Erfinder: Wisser, Erich, 6900 Bregenz (AT); Hartmann, Markus, 87665 Mauerstetten (DE); Keller, Kai-Uwe, 6800 Feldkirch-Tisis (AT); Blessing, Matthias, 6800 Feldkirch-Tosters (AT)
(74) Vertreter: Wildi, Roland

(56) Entgegenhaltungen:
- DE-A- 2 221 267
- US-A- 4 602 902
- US-A- 5 154 558

## Beschreibung

Die Erfindung betrifft einen Spreizdübel gemäss dem Oberbegriff des Patentanspruchs 1.

Eine vielfach eingesetzte, aus dem Stand der Technik hinlänglich bekannte Gattung von Spreizdübeln besteht aus einer Spreizhülse, die einen längsgeschlitzten Spreizbereich und eine im Spreizbereich konische Axialbohrung aufweist, und einem meist konischen Spreizkörper, der unter radialem Aufweiten des Spreizbereichs der Spreizhülse in der Axialbohrung verschiebbar ist. Bei diesen bekannten Spreizdübeln verjüngt sich die Axialbohrung der Spreizhülse zum, in Bezug zur Setzrichtung des Spreizdübels vorderen Ende der Spreizhülse. Das Spreizelement wird durch axiale Schläge in die sich konisch verjüngende Axialbohrung vorgetrieben. Dabei wird die Spreizhülse durch radiales Aufweiten des Spreizbereichs der in die Bohrung eingesetzten Spreizhülse verankert. Bei einer Variante dieser Art von Spreizdübeln ist die Axialbohrung zum vorderen Ende der Spreizhülse hin konisch erweitert ausgebildet. Am Vorderende der Spreizhülse ist ein konisches Spreizelement gehalten. Zur Verankerung des Spreizdübels in einer Bohrung wird die Spreizhülse über das sich am Bohrlochgrund abstützende, konische Spreizelement getrieben. Dabei wird der Spreizbereich der Spreizhülse radial aufgeweitet. Nachdem die Spreizhülse dieser bekannten Spreizdübel im Bohrloch verankert ist, wird an der Spreizhülse eine Ankerstange befestigt, die zur Anbindung eines Bauteils dient. Die Spreizhülse ist zu diesem Zweck im rückwärtigen Bereich der Axialbohrung mit einem Innengewinde versehen, in das die mit einem korrespondierenden Aussengewinde ausgestattete Ankerstange einschraubbar ist.

Für die Erstellung einer Befestigung ist es bei diesen bekannten Spreizdübeln daher erforderlich, zunächst die Spreizhülse im Bohrloch zu verankern. Erst danach kann eine Ankerstange bzw. eine Gewindestange in die Spreizhülse eingeschraubt werden, um daran ein Bauteil zu befestigen. Dabei müssen das Innengewinde am rückwärtigen Endabschnitt der Spreizhülse und das Aussengewinde der Ankerstange hinsichtlich des Durchmessers und der Gewindeart aufeinander abgestimmt sein. An eine Spreizhülse mit einem metrischen Innengewinde eines bestimmten Innendurchmessers kann nur eine Ankerstange mit einem korrespondierenden metrischen Aussengewinde und entsprechendem Aussendurchmessser angeschlossen werden. Es ist bei diesen bekannten Spreizdübeln beispielsweise nicht möglich, eine Spreizhülse mit metrischem Innengewinde mit einer Ankerstange mit einem Whitworth-Gewinde (Zollgewinde) anzubinden. Auch besteht keine Möglichkeit, an diese bekannten Spreizdübel ein konventionelles Bewehrungseisen mit radialen bzw. schraubenförmigen Profilierungen der Mantelfläche anzuschliessen.

Aus der US 4,602,902 A ist ein Spreizdübel bekannt, der eine Hülse, die einen Längsschlitz aufweist und mit einer Axialbohrung versehen ist, welche im Spreizbereich konisch, in Bezug zur Setzrichtung zum rückwärtigen Ende hin verjüngend ausgebildet ist, und einen konisch ausgebildeten Spreizkörper umfasst, welcher unverlierbar in der Hülse angeordnet ist und unter radialem Aufweiten des Spreizbereichs in der Axialbohrung entgegen der Setzrichtung axial verschiebbar ist. Der Spreizkörper weist eine zylindrische Durchgangsbohrung auf, in die ein Gewindebolzen eintreibbar ist. Am in Setzungsrichtung liegenden Ende der Hülse ist ein Widerlager ausgebildet, welches beim Eintreiben des Gewindebolzens ein Verschieben des Spreizkörpers in Setzrichtung verhindert. In einer Variante weist der Spreizkörper zwei Segmente auf, die aus der Hülse in Setzrichtung vorstehen und sich am Bohrlochgrund beim Eintreiben des Gewindebolzens abstützen. Die Segmente des Spreizkörpers werden mit einem Federring zusammengehalten. Nachteilig bei diesen Lösungen ist, dass zum Aufweiten des Spreizkörpers mit dem Gewindebolzen hohe Kräfte, beziehungsweise Schläge auf diesen aufgebracht werden müssen. Eine allfällige Innenprofilierung der Durchgangsbohrung des Spreizkörpers wird beim Eintreiben des Gewindebolzens zerstört, beziehungsweise beschädigt.

Aus der US 5,154,558 A ist ein Spreizdübel bekannt, bei dem in einer Hülse, die eine konische Axialbohrung aufweist, ein aus mehreren, über ein Verbindungselement gehaltenen Segmenten gebildeter, konischer Spreizkörper axial verschieblich gelagert ist. Der Spreizdübel dient zur Schaffung von Befestigungspunkten für Ankerstangen, die keine Profilierung an ihrer Mantelfläche aufweisen. Der Spreizdübel wird vor dem Einführen in die Ausnehmung im Untergrund an der Ankerstange vormontiert. Durch Zug an der Ankerstange weitet sich die Hülse in der Ausnehmung radial auf, wodurch die Ankerstange gehalten wird. Nachteilig an dieser Lösung ist, dass die Ankerstange nicht nach dem Einführen der Hülse mit dem Spreizkörper in die Ausnehmung einschiebbar ist. Zudem erlaubt dieser Spreizdübel keine nachträgliche Höhenjustierung der Ankerstange am Befestigungspunkt.

Aufgabe der vorliegenden Erfindung ist es daher, einen Spreizdübel zu schaffen, der eine einfache und schnelle Erstellung eines Befestigungspunkts erlaubt. Dabei soll es nicht mehr erforderlich sein, vor dem Befestigen der Ankerstange die Spreizhülse in einem gesonderten Arbeitsschritt im Bohrloch zu verankern. Es soll ein Spreizdübel geschaffen werden, der die Voraussetzungen für die Anbindung von Ankerstangen mit unterschiedlichen Profilierungen der Mantelfläche aufweist. Der Spreizdübel soll auch eine gewisse Toleranz gegenüber den Aussendurchmessem der anzubindenden Ankerstangen aufweisen. Dabei soll der Spreizdübel auch in einem sich öffnenden Riss im Untergrund ein für die geforderte Sicherheit ausreichendes Nachspreizverhalten besitzen.

Diese Aufgaben werden durch einen Spreizdübel mit den im kennzeichnenden Abschnitt des Patentanspruchs 1 angeführten Merkmalen gelöst.

Das Zusammenwirken des aus einzelnen Spannsegmenten gebildeten, radial elastisch aufweitbar zusammengehaltenen Spreizkörpers mit zentraler Durchgangsbohrung und der sich zum rückwärtigen Ende konisch verjüngenden Axialbohrung der Spreizhülse ermöglicht es, die Verankerung des Spreizdübels im Bohrloch und die Anbindung der Ankerstange in einem Schritt vorzunehmen. Die Spreizhülse muss bloss noch in die Bohrung im Untergrund eingeschoben werden. Die Verankerung erfolgt zugleich mit der Schnellanbindung der Ankerstange, indem die Ankerstange in die Durchgangsbohrung des von den Spannsegmenten gebildeten Spreizkörpers eingeschoben wird und die Verbindung danach auf Zug belastet wird. Beim Einschieben der Ankerstange können die Spannsegmente radial ausweichen. Indem sie radial elastisch aufweitbar zusammengehalten sind, werden sie gegen die Aussenseite der Ankerstange gepresst und halten diese infolge eines Kraftschlusses oder ggf. eines Formschlusses. Unter Zugbelastung wird der konusförmige Spreizkörper in die sich konisch verjüngende Axialbohrung gezogen, wobei die Spannsegmente weiter zusammen- und gegen die Aussenfläche der Ankerstange gepresst werden. Dadurch wird die kraft- bzw. formschlüssige Verbindung mit der Ankerstange vergrössert. Gleichzeitig wird durch das Verschieben des segmentierten Spreizkörpers in der Axialbohrung der Spreizhülse der Spreizbereich radial aufgeweitet und dadurch der Spreizdübel im Bohrloch verankert.

Der aus radial federnd aufweitbaren Spannsegmenten bestehende Spreizkörper weist gegenüber Ankerstangen mit Übermass eine gewisse Toleranz auf. So können Ankerstangen eingesetzt werden, die bis zu 10% Übermass gegenüber dem Nennanschlussdurchmesser des Spreizdübels aufweisen. Durch die erfindungsgemässe Ausbildung des Spreizdübels sind auch die Voraussetzungen für die Verwendung von Ankerstangen mit unterschiedlich profilierten Mantelflächen geschaffen. So ist es möglich, Ankerstangen mit metrischem Gewinde, mit Whitworth-Gewinde (Zollgewinde) oder sogar Armierungseisen mit radialen oder schraubenlinienförmigen Profilierungen der Mantelfläche zuverlässig an dem erfindungsgemässen Spreizdübel zu befestigen.

Eine besonders einfache Art einer radial federnden Verbindung der Spannsegmente des Spreizkörpers stellt die Verwendung von wenigstens einem elastischen O-Ring dar, der in einer radialen Nut angeordnet ist, die in der Aussenfläche der Spannsegmente verläuft.

Aus Symmetriegründen erweist es sich von Vorteil, wenn der Spreizkörper von wenigstens vier Spannsegmenten gebildet wird, die gegen die Federkraft eines elastischen Halteteils radial aufweitbar sind.

Zur Verbesserung der Fixierung der Ankerstange sind an den Innenflächen der Spannsegmente Mittel vorgesehen, die mit der Profilierung der Mantelfläche der Ankerstange eine formschlüssige Verbindung bilden. Im Fall einer gewindeartigen Profilierung der Ankerstange, insbesondere bei Gewindestangen, ist dadurch auch eine nachträgliche Höhenjustierung der Ankerstange ermöglicht.

Die Mittel zur Erzeugung des Formschlusses können beispielsweise in einer gegenüber dem Material der Ankerstange weicheren Beschichtung bestehen, die wenigstens über einen Teil der Längserstreckung der Spannsegmente vorgesehen ist. Unter Zugbelastung der Ankerstange ermöglicht die Beschichtung ein Einprägen der Profilierung der Mantelfläche der Ankerstange in die die Durchgangbohrung begrenzenden Innenseiten der Spannsegmente.

In einer einfachen alternativen Ausführungsvariante der Erfindung sind an den Innenseiten der Spannsegmente Profilierungen vorgesehen, die gegenüber der Achse des Spreizkörpers geneigt verlaufen und sich wenigstens über einen Teil der Länge der Spannsegmente erstrecken. Infolge dieser allgemein gehaltenen Form der Profilierung sind Ankerstangen mit sehr unterschiedlichen Profilierungen ihrer Mantelfläche einsetzbar. Besonders vorteilhaft für die Haltewerte ist es, wenn die Profilierungen der Innenseiten der Spannsegmente gewindeartig ausgebildet sind. Dadurch können auch Gewindestangen mit unterschiedlichen Gewindearten formschlüssig gehalten werden, indem die Profilierungen der Mantelfläche der Ankerstange und an den Innenseiten der Spannsegmente an verschiedenen Bereichen entlang der Länge der Spannsegmente miteinander einen Formschluss bilden. Gewindestangen, deren Gewinde mit den gewindeartigen Profilierungen der Innenseiten der Spannsegmente übereinstimmen, sind sehr einfach höhenverstellbar, indem die Gewindestange mehr oder weniger weit in den Spreizkörper eingeschraubt wird.

In einer vorteilhaften Variante der Erfindung sind die Innenseiten benachbarter Spannsegmente abwechselnd gemäss unterschiedlichen Gewindearten profiliert. Im Fall von vier Spannsegmenten weisen beispielsweise zwei einander diagonal gegenüberliegende Spannsegmente ein metrisches Gewinde auf, während die auf der zweiten Diagonale einander gegenüberliegenden Spannsegmente mit einem Whitworth-Gewinde versehen sind. Beim Einschieben einer Gewindestange mit metrischem Gewinde gehen die zwei Spannsegmente mit der korrespondierenden metrischen Gewindeprofilierung mit der Gewindestange eine formschlüssige Verbindung ein. Bei einer Gewindestange mit Whitworth-Gewinde besorgen die anderen beiden Spannsegmente den Formschluss. Die jeweils anderen Spannsegmente verstärken den Formschluss, indem sie entlang ihrer Längserstreckung in denjenigen Abschnitten, in denen eine annähernde Übereinstimmung der Profilierungen existiert, ebenfalls einen Formschluss bilden. Sowohl für eine Gewindestange mit metrischem Aussengewinde als auch für eine Gewindestange mit Whitworth-Gewinde bleibt die Höhenverstellbarkeit erhalten.

In einer alternativen Ausführungsvariante der Erfindung sind die Profilierungen an den Innenseiten der Spannsegmente als Schneiden ausgebildet, die eine grössere Härte aufweisen als das Material einer eingeschobenen Ankerstange. Unter Zugbelastung graben sich die Schneiden in die Mantelfläche der eingesetzten Ankerstange und stellen eine formschlüssige Verbindung her. Im Fall einer gewindeartigen Anordnung der Schneiden an den Innenwandungen der Spannsegmente graben sich die Schneiden bei Belastung der Ankerstange gewindeartig in deren Mantelfläche. Dadurch ist die Ankerstange höhenverstellbar, indem sie mehr oder weniger weit in den Spreizdübel eingeschraubt wird.

Um der Hülse des in das Bohrloch eingesetzten Spreizdübels eine gewisse Vorfixierung zu verschaffen, ist die Hülse wenigstens im Spreizbereich mit schneidenartigen Vorsprüngen ausgestattet, die vorzugsweise ringförmig von der Aussenfläche der Hülse abragen. Die Vorsprünge bewirken einerseits ein Vorfixierung des Spreizdübels im Bohrloch. Durch diese Massnahme ist der erfindungsgemässe Spreizdübel auch bei Überkopfmontage einsetzbar. Andererseits drücken sich die ringschneidenartigen Vorsprünge beim Aufweiten des Spreizbereichs unter Belastung in die Bohrlochwand ein und erzeugen eine Hinterpressung. Hierdurch wird eine formschlüssige Verbindung zwischen der Bohrlochwand und der Hülse des Spreizdübels erzielt.

Im folgenden wird die Erfindung unter Bezugnahme auf ein in den schematischen Zeichnungen dargestelltes Ausführungsbeispiel näher erläutert. Es zeigen:
- Fig. 1: einen Axialschnitt des erfindungsgemässen Spreizdübels mit eingesetzter Gewindestange; und
- Fig. 2: einen Querschnitt des Spreizdübels gemäss Schnittlinie II-II in Fig. 1.

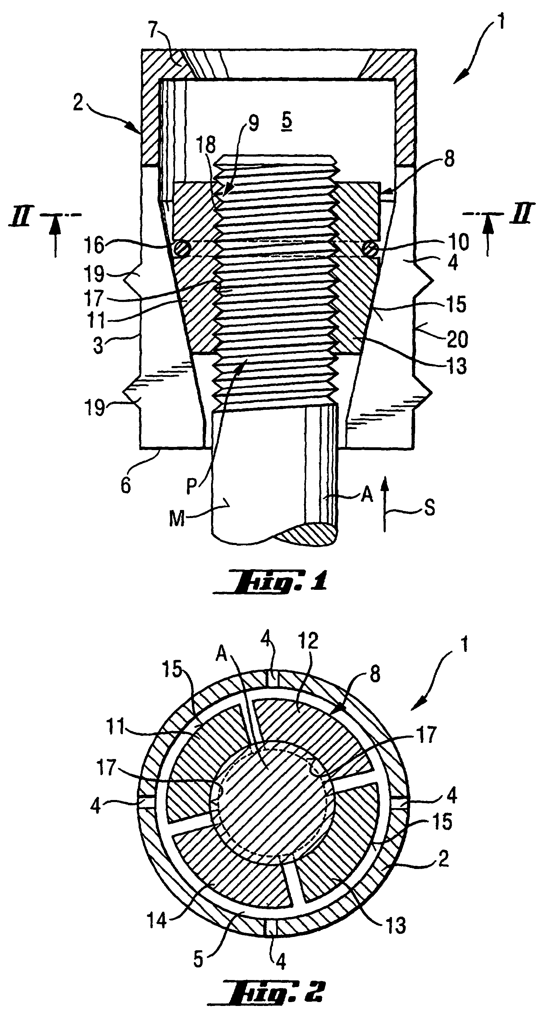

Das in Fig. 1 und Fig. 2 im Axialschnitt dargestellte Ausführungsbeispiel des erfindungsgemässen Spreizdübels ist gesamthaft mit dem Bezugszeichen 1 versehen. Der Spreizdübel 1 umfasst eine Hülse 2, die einen mit axialen Schlitzen 4 versehenen Spreizbereich 3 aufweist. Die Hülse 2 besitzt eine Axialbohrung 5, die im Spreizbereich 3 einen sich konisch verjüngenden Abschnitt aufweist. Gemäss dem dargestellten Ausführungsbeispiel erstreckt sich der Spreizbereich 3, bezogen auf die durch den Pfeil S angedeutete Setzrichtung, im wesentlichen über die rückwärtige Hälfte der Hülse 2 und verjüngt sich die Axialbohrung 5 zum rückwärtigen Ende 6 der Hülse 2. Am gegenüberliegenden Vorderende der Hülse 2 ist ein ringförmiger Anschlag 7 angeordnet, der in die Axialbohrung 5 der Hülse 2 ragt und diese verengt. An der Aussenfläche 20 der Hülse 2 sind vorzugsweise ringschneidenförmige Vorsprünge 19 vorgesehen, die von der Aussenfläche 20 der Hülse 2 abragen.

In der Axialbohrung 5 ist ein Spreizkörper 8 axial verschiebbar angeordnet. Der Spreizkörper 8 weist über einen Teil seiner Längserstreckung eine konische Aussenkontur auf. Die konische Aussenkontur ist dabei vorzugsweise an die Konizität des sich konisch verjüngenden Abschnitts der Axialbohrung 5 der Hülse 2 angenähert. Der Spreizkörper 8 ist mit einer zylindrischen Durchgangsbohrung 9 versehen, deren Innendurchmesser den Nennanschlussdurchmesser des Spreizdübels 1 bestimmt. Gemäss der Querschnittsdarstellung in Fig. 2 besteht der Spreizkörper 8 aus vier Spannsegmenten 11- 14, die von einem O-Ring 10 zusammengehalten werden, der in einer Nut 16 in den Aussenflächen 15 der Spannsegmente 11 - 14 angeordnet ist. Der O-Ring ist elastisch aufweitbar. Dadurch sind die Spannsegmente 11 - 14 beim Einschieben einer Ankerstange A radial beweglich. Der grösste Aussendurchmesser des Spreizkörpers 8 im zylindrischen Abschnitt ist grösser als der durch den ringförmigen Anschlag 7 am Vorderende der Hülse 2 verengte Innendurchmesser der Axialbohrung 5.

Die Innenseiten 17 der Spannsegmente 11 - 14 sind mit Profilierungen 18 versehen, die vorzugsweise gewindeartig ausgebildet sind. Dabei können beispielsweise die zwei einander auf einer Diagonale gegenüberliegenden Spannsegmente 11, 13 mit einer Profilierung nach Art eines metrischen Gewindes versehen sein, während das andere Paar von Spannsegmenten 12, 14 eine Profilierung gemäss einem Whitworth-Gewinde aufweist. Es versteht sich, dass die Innenseiten 17 aller Spannsegmente 11 - 14 mit der gleichen Art von Profilierung 18 versehen sein können. Die Profilierungen 18 können auch schneidenartig ausgebildet sein, um bei Belastung der Ankerstange A in die weichere Mantelfläche M eine entsprechende Profilierung P einzuprägen. Anstelle einer Profilierung können die Innenseiten 17 der Spannsegmente 11 - 14 auch eine Beschichtung aufweisen, die gegenüber dem Material der Ankerstange A weicher ist. Dadurch wird bei Belastung der Ankerstange A die Profilierung P der Mantelfläche M in die Innenseiten der Spannsegmente 11 - 14 eingeprägt.

Zur Erstellung einer Befestigung mit dem erfindungsgemässen Speizdübel 1, wird dieser in ein Bohrloch eingesetzt. Die ringschneidenförmigen Vorsprünge 19 an der Aussenfläche 20 der Hülse 2 gewährleisten eine gewisse Vorfixierung des Spreizdübels 1, damit dieser beispielsweise bei Überkopfmontage nicht aus dem Bohrloch herausfällt. Die Verankerung des Spreizdübels 1 erfolgt zugleich mit der Anbindung der Ankerstange A, indem diese in die Durchgangsbohrung 9 des Spreizkörpers 8 eingeschoben wird. Beim Einschieben der an der Mantelfläche M mit Profilierungen P versehenen Ankerstange A wird zunächst der Spreizkörper 8 gegen den ringförmigen Anschlag 7 geschoben. Sobald der Spreizkörper 8 am Anschlag 7 anliegt, dringt die Ankerstange A beim weiteren Vorschieben in die Durchgangsbohrung 9 des Spreizkörpers 8 ein. Dies wird durch das elastische radiale Ausweichen der vom O-Ring 10 zusammengehaltenen Spannsegmente 11 -14 erleichtert. Unmittelbar nachdem die Ankerstange A im gewünschten Umfang in die Durchgangsbohrung 9 eingeschoben ist, kann sie auf Zug belastet werden. Die Ankerstange A kann nicht aus der Durchgangsbohrung 9 des Spreizkörpers 8 herausfallen, da ihre Profilierungen P und die Profilierungen 18 an den Innenseiten 17 der Spannsegmente 11 - 14 eine formschlüssige Verbindung eingehen. Durch die Zugbelastung der Ankerstange A wird der konische Abschnitt des Spreizkörpers 8 in den sich konisch verjüngenden Bereich der Axialbohrung 5 der Hülse 2 gezogen. Dabei werden die Spannsegmente 11 - 14 bei zunehmender Belastung immer fester gegen die Mantelfläche M der Ankerstange gepresst. Gleichzeitig wird durch das Einziehen des Spreizkörpers 8 in den konischen Bereich der Axialbohrung 5 der Spreizbereich 3 der Hülse 2 radial aufgeweitet. Dadurch wird die Aussenfläche 20 der Hülse 2 gegen die Bohrlochwand gepresst und erzeugen die ringschneidenförmigen Vorsprünge 19 in der Bohrlochwand eine formschlüssige Hinterpressung. Auf diese Weise wird die kraftschlüssige Verankerung der Hülse 2 im Bohrloch durch einen Formschlussanteil unterstützt und es sind höhere Haltewerte erzielbar.

Die erfindungsgemässe Ausbildung des Spreizdübels bietet eine Reihe von Vorteilen. Der Spreizkörper aus radial federnd aufweitbaren Spannsegmenten stellt für die Ankerstange ein Schnellanbindesystem dar. Nach dem Einschieben des Spreizdübels in das Bohrloch und dem anschliessenden Schnellanbinden der Ankerstange kann sofort die Lasteinleitung erfolgen. Dabei wird der Spreizbereich der Hülse des Spreizdübels radial aufgeweitet und der Spreizdübel wird im Bohrloch verankert. Der erfindungsgemässe Spreizdübel bietet eine grosse Flexibilität bezüglich der einsetzbaren Ankerstangen. Diese können eine Profilierung ihrer Mantelfläche nach Art eines metrischen Gewindes oder eines Whitworth-Gewindes aufweisen. Auch Armierungseisen mit radialen oder schraubenlinienförmigen Profilierungen ihrer Mantelfläche können eingesetzt werden. Bei mit Gewinden versehenen Ankerstangen ist zudem eine Höhenverstellbarkeit der Anschlussbauteile gegeben. Der aus Einzelsegmenten bestehende Spreizkörper erlaubt es sogar, Ankerstangen einzuschieben, deren Aussendurchmesser den Nennanschlussdurchmesser des Spreizdübels überschreitet.

## Patentansprüche

1. Spreizdübel (1) umfassend eine Hülse (2), die einen mit Längsschlitzen (4) versehenen Spreizbereich (3) aufweist und mit einer Axialbohrung (5) versehen ist, die im Spreizbereich (3) konisch ausgebildet ist und sich zu ihrem, in Bezug zur Setzrichtung (S) rückwärtigen Ende (6) hin verjüngt, und einen wenigstens über einen Teil seiner Längserstreckung konisch ausgebildeten Spreizkörper (8), der unverlierbar in der Hülse (2) angeordnet ist und unter radialem Aufweiten des Spreizbereichs (3) in der Axialbohrung (5) axial verschiebbar ist sowie eine zylindrische Durchgangsbohrung (9) aufweist, wobei die Hülse an ihrem, in Bezug zur Setzrichtung (S) vorderen Ende einen Anschlag (7) zur Begrenzung der axialen Verschiebbarkeit des Spreizkörpers (8) in Setzrichtung (S) aufweist, **dadurch gekennzeichnet, dass** der Spreizkörper (8) von Spannsegmenten (11 - 14) gebildet ist, die sich in axiale Richtung erstrecken und radial elastisch aufweitbar zusammengehalten sind, und dass die Axialbohrung (5) der Hülse (2) zwischen dem Anschlag (7) und dem konisch ausgebildeten, sich verjüngenden Bereich einen nicht konischen Bereich aufweist, in welchem der Spreizkörper (8) in, wie auch entgegen der Setzrichtung (S) in der Axialbohrung (5) axial verschiebbar ist.

2. Spreizdübel nach Anspruch 1, **dadurch gekennzeichnet, dass** die Spannsegmente (11 - 14) des Spreizkörpers (8) von wenigstens einem elastischen O-Ring (10) zusammengehalten sind, der in einer radialen Nut (16) angeordnet ist, die in der Aussenfläche (15) der Spannsegmente (11 - 14) verläuft.

3. Spreizdübel nach Anspruch 1 oder 2, **dadurch gekennzeichnet, dass** der Spreizkörper (8) wenigstens vier Spannsegmente (11 - 14) umfasst.

4. Spreizdübel nach einem der vorangehenden Ansprüche, **dadurch gekennzeichnet, dass** an den Innenseiten (17) der Spannsegmente (11 - 14) Mittel vorgesehen sind, die mit Profilierungen (P) der Mantelfläche (M) einer eingeschobenen Ankerstange (A) einen Formschluss bilden.

5. Spreizdübel nach Anspruch 4, **dadurch gekennzeichnet, dass** die Mittel eine Beschichtung umfassen, die wenigstens in einem Teil der Längserstreckung der Innenseite (17) der Spannsegmente (11 - 14) vorgesehen ist und weicher ist als das Material der Ankerstage (A), damit unter Zugbelastung der Ankerstange (A) ein Einprägen der Profilierung (P) der Mantelfläche (M) der Ankerstange (A) in die Innenseite (17) der Spannsegmente (11 - 14) ermöglicht ist.

6. Spreizdübel nach Anspruch 4, **dadurch gekennzeichnet, dass** die Mittel an den Innenseiten (17) der Spannsegmente (11 - 14) Profilierungen (18) umfassen, die gegenüber der Achse des Spreizkörpers (8) geneigt verlaufen und sich wenigstens über einen Teil der Länge der Spannsegmente (11 - 14) erstrecken.

7. Spreizdübel nach Anspruch 6, **dadurch gekennzeichnet, dass** die Profilierungen (18) der Innenseiten (17) der Spannsegmente (11 - 14) gewindeartig ausgebildet sind.

8. Spreizdübel nach Anspruch 7, **dadurch gekennzeichnet, dass** die Innenseiten (17) benachbarter Spannsegmente (11 - 14) mit voneinander verschiedenen Gewindearten, beispielsweise abwechselnd mit einem metrischen Gewinde und einem Whitworth-Gewinde, versehen sind.

9. Spreizdübel nach Anspruch 6, **dadurch gekennzeichnet, dass** die Profilierungen (18) an den Innenseiten (17) der Spannsegmente (11- 14) Schneiden sind, die eine grössere Härte aufweisen als das Material einer eingeschobenen Ankerstange (A).

10. Sprelzdübel nach einem der vorangehenden Ansprüche, **dadurch gekennzeichnet, dass** die Hülse (2) wenigstens im Spreizbereich (3) mit schneidenartigen Vorsprüngen (19) ausgestattet ist, die vorzugsweise ringförmig von der Aussenfläche (20) der Hülse (2) abragen.

## Claims

1. Expansion plug (1) comprising a sleeve (2) having an expansion region (3) provided with longitudinal slits (4) and an axial bore (5) which is designed conical in the expansion region (3) and narrows towards its rearward end (6) relative to the placement direction (S), and an expansion body (8) designed conical over at least part of its longitudinal extent, said expansion body being arranged captive in the sleeve (2) and axially displaceable in the axial bore (5), causing radial expansion of the expansion region (3), and a cylindrical through bore (9), whereby the sleeve has on its front end relative to the placement direction (S) a stop (7) for limiting the axial displaceability of the expansion body (8) in the placement direction (S), **characterised in that** the expansion body (8) comprises clamping segments (11-14) which extend in the axial direction and are held together expansible in radially elastic manner, and that between the stop (7) and the conically formed narrowing region, the axial bore (5) of the sleeve (2) has a non-conical region in which the expansion body (8) is axially displaceable in, and opposing, the placement direction (S) in the axial bore (5).

2. Expansion plug according to Claim 1, **characterised in that** the clamping segments (11-14) of the expansion body (8) are held together by at least one elastic O-ring (10) arranged in a radial groove (16) running in the outer surface (15) of the clamping segments (11-14).

3. Expansion plug according to Claim 1 or 2, **characterised in that** the expansion body (8) has at least four clamping segments (11-14).

4. Expansion plug according to one of the previous claims, **characterised in that**, on the inside (17) of the clamping segments (11-14), means are provided which engage in form-fitting manner with profiling (P) of the jacket surface (M) of an inserted anchor rod (A).

5. Expansion plug according to Claim 4, **characterised in that** the means include a coating which is provided in at least part of the longitudinal extent of the inside (17) of the clamping segments (11-14) and is softer than the material of the anchor rod (A) in order that, under tensional loading of the anchor rod (A), impressing of the profiling (P) of the jacket surface (M) of the anchor rod (A) into the inside (17) of the clamping segments (11-14) is enabled.

6. Expansion plug according to Claim 4, **characterised in that** the means on the inside (17) of the clamping segments (11-14) comprise profiling (18) which runs inclined relative to the axis of the expansion body (8) and extends over at least part of the length of the clamping segments (11-14).

7. Expansion plug according to Claim 6, **characterised in that** the profiling (18) of the inside (17) of the clamping segments (11-14) is designed screw thread-like.

8. Expansion plug according to Claim 7, **characterised in that** the inside (17) of adjoining clamping segments (11-14) is provided with thread types that differ from one another, for instance, with alternating metric thread and Whitworth thread.

9. Expansion plug according to Claim 6, **characterised in that** the profiling (18) on the inside (17) of the clamping segments (11-14) are blades which have a greater hardness than the material of an inserted anchor rod (A).

10. Expansion plug according to one of the previous claims, **characterised in that** the sleeve (2) is equipped, at least in the expansion region (3), with blade-like projections (19) which preferably extend in ring-shaped manner from the outer surface (20) of the sleeve (2).

## Revendications

1. Cheville à expansion (1) comprenant un manchon (2) qui comporte une zone d'expansion (3) pourvue de fentes longitudinales (4) et est doté d'un trou axial (5) qui, dans la zone d'expansion (3), est de conformation conique et se rétrécit vers son extrémité (6) située à l'arrière par rapport à la direction de scellement (S), et comprenant un corps d'expansion (8), lequel est de conformation conique au moins sur une partie de son extension longitudinale, est disposé sans risque de perte dans le manchon (2), est déplaçable axialement dans le trou axial (5) en élargissant radialement la zone d'expansion (3) et est pourvu d'un trou central débouchant (9), le manchon comportant, à son extrémité située à l'avant par rapport à la direction de scellement (S), une butée (7) pour limiter la possibilité de déplacement axial du corps d'expansion (8) dans la direction de scellement (S), **caractérisée en ce que** le corps d'expansion (8) est formé de segments de serrage (11-14) qui s'étendent dans la direction axiale et sont réunis avec une possibilité de déploiement élastique radial, et **en ce que** le trou axial (5) du manchon (2) comporte, entre la butée (7) et la zone rétrécie de conformation conique, une zone non conique dans laquelle le corps d'expansion (8) est déplaçable axialement dans le trou axial (5) dans la direction de scellement (S) et à l'opposé de celle-ci.

2. Cheville à expansion selon la revendication 1, **caractérisée en ce que** les segments de serrage (11-14) du corps d'expansion (8) sont réunis par au moins un joint torique élastique (10) qui est disposé dans une rainure radiale (16), laquelle s'étend dans la face extérieure (15) des segments de serrage (11-14).

3. Cheville à expansion selon la revendication 1 ou 2, **caractérisée en ce que** le corps d'expansion (8) comprend au moins quatre segments de serrage (11-14).

4. Cheville à expansion selon une des revendications précédentes, **caractérisée en ce que** sur les côtés intérieurs (17) des segments de serrage (11-14) sont prévus des moyens qui forment une liaison par complémentarité de formes avec des profilages (P) de la surface périphérique (M) d'une tige d'ancrage (A) insérée.

5. Cheville à expansion selon la revendication 4, **caractérisée en ce que** les moyens comprennent un revêtement qui est prévu au moins dans une partie de l'extension longitudinale du côté intérieur (17) des segments de serrage (11-14) et qui est plus tendre que la matière de la tige d'ancrage (A) afin que, lors de la sollicitation en traction de la tige d'ancrage (A), le profilage (P) de la surface périphérique (M) de la tige d'ancrage (A) puisse pénétrer dans le côté intérieur (17) des segments de serrage (11-14).

6. Cheville à expansion selon la revendication 4, **caractérisée en ce que** les moyens sur les côtés intérieurs (17) des segments de serrage (11-14) comprennent des profilages (18) qui sont inclinés par rapport à l'axe du corps d'expansion (8) et s'étendent sur au moins une partie de la longueur des segments de serrage (11-14).

7. Cheville à expansion selon la revendication 6, **caractérisée en ce que** les profilages (18) des côtés intérieurs (17) des segments de serrage (11-14) sont conformés en filetages.

8. Cheville à expansion selon la revendication 7, **caractérisée en ce que** les côtés intérieurs (17) de segments de serrage (11-14) voisins sont munis de types de filetages différents l'un de l'autre, par exemple en alternance d'un filetage métrique et d'un filetage Whitworth.

9. Cheville à expansion selon la revendication 6, **caractérisée en ce que** les profilages (18) sur les côtés intérieurs (17) des segments de serrage (11-14) sont des taillants qui présentent une dureté supérieure à celle de la matière d'une tige d'ancrage (A) insérée.

10. Cheville à expansion selon une des revendications précédentes, **caractérisée en ce que** le manchon (2) est muni, au moins dans la zone d'expansion (3), de saillies formant taillants (19) qui dépassent, de préférence de manière annulaire, de la face extérieure (20) du manchon (2).
